# EUROPÄISCHE PATENTANMELDUNG

(11) **EP 2 482 096 A1**
(43) Veröffentlichungstag der Anmeldung: **01.08.2012**
(21) Anmeldenummer: 12000447.8
(22) Anmeldetag: 24.01.2012
(51) Int. Cl.: G01S 13/32

(54) **Verfahren zur Sendesignaltrennung in einem Radarsystem**

(30) Priorität: 31.01.2011 DE 102011009874
(71) Anmelder: Karlsruher Institut Für Technologie (KIT), 76131 Karlsruhe (DE)
(72) Erfinder: Zwick, Thomas, 76676 Graben-Neudorf (DE); Sturm, Christian, 76131 Karlsruhe (DE)
(74) Vertreter: Gagel, Roland

(57) **Zusammenfassung**

Die vorliegende Erfindung betrifft ein Verfahren zur Sendesignaltrennung in Radarsystemen sowie ein zugehöriges Radarsystem. Bei dem Verfahren werden die Sendesignale mittels OFDM auf mehrere Subträger aufgeteilt, die den Sendeantennen (2-4) nach einem Verteilungsschema zugeordnet werden. In diesem Verteilungsschema ist jeder Subträger nur einer Sendeantenne (2-4) zugeordnet. Die jeweils jeder Sendeantenne (2-4) zugeordneten Subträger sind über die gesamte Signalbandbreite verteilt. Damit lässt sich eine sehr hohe Dynamik bei gleichzeitiger vollständiger Orthogonalität der Signalpfade erreichen.

## Beschreibung

### Technisches Anwendungsgebiet

Die vorliegende Erfindung betrifft ein Verfahren zur Sendesignaltrennung in einem Radarsystem, das mehrere Sendeantennen mit individuellen Sendesignalen und eine oder mehrere Empfangsantennen für Radarsignale aufweist, bei dem die Radarsignale so über die einzelnen Sendeantennen ausgesendet werden, dass empfangene Radarsignale den Sendeantennen zugeordnet werden können, von denen sie ausgesendet wurden. Die Erfindung betrifft auch ein Radarsystem, das eine oder mehrere Sendeeinrichtungen und Empfangseinrichtungen für Radarsignale aufweist, die zur Durchführung des Verfahrens ausgebildet sind.

Eine Nutzer- bzw. Sendesignaltrennung in Radarsystemen ist erforderlich, wenn mehrere Radarsender in geringer räumlicher Distanz im selben Frequenzbereich zum Einsatz kommen sollen. Dies ist bspw. in MIMO-Radarsystemen (MIMO: Multiple-In-Multiple-Out) oder in Sensornetzwerken der Fall. In MIMO-Radarsystemen werden auf einer Plattform simultan mehrere Sender und Empfänger eingesetzt, um instantan erweiterte Information wie bspw. die 3D-Geometrie über ein beobachtetes Szenario zu gewinnen. Die von den verschiedenen Sendern abgestrahlten Signale müssen an den Empfängern dann eindeutig trennbar sein. In Sensor-Netzwerken kommen typischerweise identische oder ähnliche Sensoren auf verschiedenen Plattformen auf geringem Raum zum Einsatz. Für einen störungsfreien Betrieb dürfen die Sendesignale der einzelnen Sender bzw. Sensoren nicht interferieren.

### Stand der Technik

Typischerweise wird die Sendesignaltrennung bei mehreren Sendern bzw. Sendeantennen entweder durch Zeitmultiplex oder durch Codemultiplex realisiert. Beide Verfahren haben jedoch entscheidende Nachteile.

Bei einer Trennung durch Zeitmultiplex kann immer nur ein Sender gleichzeitig aktiv sein. Im Fall eines MIMO-Radars können dann keine bewegten Objekte vermessen werden, da sich das beobachtete Szenario zwischen der Aktivität der einzelnen Sender verändern würde. Auch für Sensornetzwerke bestehen in diesem Fall drastische Einschränkungen bezüglich der zeitlichen Verfügbarkeit der einzelnen Sensoren. Grundsätzlich kann für beide Anwendungen unter Einsatz von Zeitmultiplex nicht das maximal mögliche Signal-zu-Rausch-Verhältnis (SNR) erreicht werden.

Bei der Sendesignaltrennung durch Codemultiplex erfolgt eine orthogonale Codierung der Sendesignale mit Hilfe geeigneter Codes. Über diese Codierung können die empfangenen Radarsignale den Sendeantennen zugeordnet werden, von denen sie ausgesendet wurden. Hierbei ist allerdings zu beachten, dass zur Messung des Entfernungsprofils für jeden Signalpfad eine Impulsantwort bestimmt werden muss. Dies erfolgt üblicherweise durch eine Korrelation der Sendesignale mit den Empfangssignalen. Die Qualität des Ergebnisses hängt dabei von der Autokorrelationsfunktion des Sendesignals ab. Mögliche Nebenmaxima der Autokorrelationsfunktion werden direkt in die Radarmessung abgebildet und begrenzen die Dynamik. Im Fall der Code-basierten Sendesignaltrennung bestehen also zwei Anforderungen: Alle Sendesignale müssen orthogonal sein und gleichzeitig niedrige Nebenmaxima der Autokorrelationsfunktion aufweisen. Es kann theoretisch gezeigt werden, dass sich diese beiden Bedingungen gegenseitig ausschließen und keine Codierung existiert, die beide Eigenschaften perfekt vereint. Stattdessen existiert ein gemeinsames Limit für die Nebenmaxima der Autokorrelationsfunktion und die Orthogonalität, welches nicht unterschritten werden kann (Welch-Bound). In der Praxis bedeutet dies, dass Radarsysteme, die auf Basis einer Codierung der Sendesignale zur Signaltrennung arbeiten, sowohl eine limitierte Dynamik der Impulsantwort als auch ein Übersprechen der Sendesignale aufweisen.

In der Kommunikationstechnik wird zur Nutzertrennung häufig Frequenzmultiplex eingesetzt, wobei jedem Nutzer ein schmaler Teil der gesamten verfügbaren Bandbreite zugeteilt wird. Dies ist bei Radaranwendungen jedoch nicht möglich, ohne eine deutliche Verschlechterung der Leistungsfähigkeit zu verursachen, da die Auflösung des Radars von der jeweils genutzten Signalbandbreite abhängt.

Aus der US 2010/0164784 A1 ist ein Verfahren zur Sendesignaltrennung in einem Radarsystem beschrieben, das mehrere Sendeantennen mit individuellen Sendesignalen und eine oder mehrere Empfangsantennen für Radarsignale aufweist, bei dem die Radarsignale mit einer Signalbandbreite so über die einzelnen Sendeantennen ausgesendet werden, dass empfangene Radarsignale den Sendeantennen zugeordnet werden können, von denen sie ausgesendet wurden. Die Sendesignale werden dabei mittels OFDM auf mehrere Subträger aufgeteilt, die den Sendeantennen nach einem Verteilungsschema zugeordnet werden, in dem jeder Subträger nur einer Sendeantenne zugeordnet ist. Die Druckschrift offenbart auch eine zur Durchführung des Verfahrens ausgebildete Vorrichtung.

Aus B.J. Donnet et al., "Combining MIMO Radar with OFDM Communications", Proceedings of the 3rd European Radar Conference, September 2006, Seiten 37 bis 40, ist ein weiteres Verfahren zur Sendesignaltrennung in MIMO Radarsystemen bekannt, bei dem die Sendesignale mittels OFDM auf mehrere Subträger aufgeteilt werden. Bei diesem Verfahren werden jeweils jeder Sendeantenne mehrere Subträger zugeordnet.

Die Aufgabe der vorliegenden Erfindung besteht darin, ein Verfahren zur Sendesignaltrennung in einem Radarsystem sowie ein zugehöriges Radarsystem anzugeben, mit denen bei Radaranwendungen eine sehr hohe Dynamik bei gleichzeitig vollständiger Orthogonalität der Signalpfade erzielt werden kann.

### Darstellung der Erfindung

Die Aufgabe wird mit dem Verfahren sowie dem Radarsystem gemäß den Patentansprüchen 1 und 5 gelöst. Vorteilhafte Ausgestaltungen des Verfahrens sowie des Radarsystems sind Gegenstand der abhängigen Patentansprüche oder lassen sich der nachfolgenden Beschreibung sowie dem Ausführungsbeispiel entnehmen.

Bei dem vorgeschlagenen Verfahren zur Sendesignaltrennung in einem Radarsystem, das mehrere Sendeantennen mit individuellen Sendesignalen und eine oder mehrere Empfangsantennen für Radarsignale aufweist, werden die Radarsignale mit einer Signalbandbreite so über die einzelnen Sendeantennen ausgesendet, dass empfangene Radarsignale den Sendeantennen zugeordnet werden können, von denen sie ausgesendet wurden. Unter einem Radarsystem wird in der vorliegenden Patentanmeldung auch ein Radar- bzw. Sensor-Netzwerk verstanden, bei dem eine oder mehrere Sendeantennen auf räumlich getrennten Plattformen angeordnet sind. Das Verfahren zeichnet sich dadurch aus, dass die Sendesignale mittels OFDM (Orthogonal Frequency Division Multiplexing) auf mehrere Subträger aufgeteilt werden, die den Sendeantennen nach einem Verteilungsschema zugeordnet werden. In diesem Verteilungsschema ist jeder Subträger nur einer Sendeantenne zugeordnet und die jeder Sendeantenne zugeordneten Subträger sind jeweils über die gesamte Signalbandbreite verteilt.

Bei diesem Verfahren zur Sendesignaltrennung wird somit eine inhärente Orthogonalität der Sendesignale durch ein spezielles Design der Mehrträger-Signale, basierend auf dem OFDM-Verfahren, erzielt. In einem klassischen OFDM-System, wie es sowohl für Kommunikations- als auch für Radaranwendungen mit jeweils einem Sender bekannt ist, wird parallel eine große Anzahl sinusförmiger phasenmodulierter Subträger abgestrahlt. Durch Wahl des Abstandes der Subträger im Frequenzbereich gleich dem inversen der Symboldauer sind diese Subträger orthogonal. Die Subträger können dadurch im Empfänger vollständig getrennt werden, obwohl sie sich im Spektralbereich überlappen. Typischerweise werden bei einer derartigen klassischen OFDM-Übertragung alle Subträger genutzt, da auf diese Weise die größtmögliche spektrale Effizienz erreicht wird.

Bei dem vorliegenden Verfahren wird im Gegensatz dazu ausgenutzt, dass für Mehrträger-Radaranwendungen nicht die spektrale Effizienz, sondern vor allem die Auflösung sowie das Signal-zu-Rausch-Verhältnis für die Leistungsfähigkeit entscheidend sind. Die Auflösung wird ausschließlich von der Signalbandbreite bestimmt. Hierbei wurde erkannt, dass eine vollständige Belegung aller Subträger nicht erforderlich ist, um die Signalbandbreite auszunutzen. Gleichzeitig wird bei einer Mehrträger-Radar-Anwendung das Signal-zu-Rausch-Verhältnis am Empfänger bei konstanter Sendeleistung nicht durch die Anzahl der genutzten Subträger beeinflusst, da sich die veränderte Rauschleistung und der veränderte Prozessierungsgewinn exakt kompensieren. Daher besitzt eine Mehrträger-Radar-Anwendung, bei der innerhalb des Sendesignals nur eine begrenzte Anzahl von Subträgern tatsächlich genutzt wird, dieselbe Leistungsfähigkeit wie ein System, das alle Subträger nutzt. Die Subträger für jede Sendeantenne müssen lediglich über die gesamte oder zumindest nahezu die gesamte Signalbandbreite verteilt sein. Dies wird beim vorgeschlagenen Verfahren durch das Verteilungsschema erreicht. Hierbei können die einzelnen K Subträger in einem beliebigen Schema verschränkt den M Sendeantennen zugeteilt werden, so dass jeder Subträger genau von lediglich einer Sendeantenne abgestrahlt wird. Dadurch sind die von den einzelnen Antennen abgestrahlten Signale orthogonal und können an den Empfängern bzw. Empfangsantennen vollständig getrennt und den jeweiligen Sendern bzw. Sendeantennen zugeordnet werden. Die Orthogonalität ist insbesondere dann perfekt gegeben, wenn alle Sender bzw. Sendeantennen durch eine gemeinsame Phasenreferenz angesteuert werden. Unter der verschränkten Zuordnung ist hierbei zu verstehen, dass die Summe der Subträger, die einer Sendeantenne zugeordnet werden, über die gesamte oder nahezu gesamte Signalbandbreite verteilt sind. Dadurch wird die durch die Signalbandbreite bestimmte hohe Auflösung der Radaranwendung nicht verringert.

Ein beispielhaftes Verteilungsschema kann hierbei so aussehen, dass bei M Sendeantennen und K Subträgern, wobei K >> M, der Sendeantenne I die Subträger I, I + M, I + 2M, ... usw. zugeordnet werden, wobei I = 1, 2, ... M. Da OFDM-Systeme mit einer sehr hohen Anzahl K von Subträgern arbeiten, bspw. 1024 Subträgern, wird durch eine derartige Zuteilung die gesamte Bandbreite der einzelnen Sendesignale praktisch nicht reduziert. Darüber hinaus sind selbstverständlich auch komplexere Muster bei der Zuteilung möglich.

In Radaranwendungen kann bei dem vorgeschlagenen Verfahren und dem zugehörigen Radarsystem die Bestimmung von Distanz und eventuell zusätzlich relativer Geschwindigkeit der Objekte in jedem Signalpfad entweder in bekannter Weise mit einer geeigneten Codierung der Sendesignale oder mit Hilfe eines Modulationssymbol-basierten Prozessierungsverfahrens erfolgen, wie es in der DE 10 2009 019 905 A1 beschrieben ist. Bei der üblichen Bestimmung der Distanz mit Hilfe einer geeigneten Codierung der Sendesignale kann diese Codierung auf minimale Nebenmaxima in der Autokorrelationsfunktion optimiert werden, da diese Codierungen bei dem vorliegenden Verfahren nicht mehr orthogonal sein müssen. Bei Nutzung des genannten Modulationssymbol-basierten Prozessierungsverfahrens werden an jedem Empfänger zunächst die Modulationssymbole aus dem empfangenen Summensignal extrahiert und danach den entsprechenden Signalwegen zugeordnet. Für jeden Signalweg wird aus den zugehörigen Modulationssymbolen anschließend individuell ein gemeinsames Distanz- und Doppler-Profil prozessiert. Nicht vorhandene Träger werden dabei einfach mit dem Wert 0 belegt. Unter Anwendung dieses Modulationssymbol-basierten Verfahrens in Verbindung mit der vorgeschlagenen Sendesignaltrennung können die Nebenmaxima auf ein beliebig niedriges Niveau reduziert werden. Damit kann sogar parallel beliebige Nutzinformation auf die Subträger moduliert werden.

Im Fall des Modulationssymbol-basierten Verfahrens reduziert sich bei einer unvollständigen Belegung der Subträger die maximal messbare Entfernung. Dieser Effekt kann durch eine Erweiterung des vorgeschlagenen Verfahrens vermieden werden, indem die Zuordnung der Subträger zu den Sendeantennen zyklisch permutiert wird, so dass nach einer bestimmten Anzahl von Zeitschritten jeder Subträger von jeder Antenne abgestrahlt wurde.

Das vorgeschlagene Radarsystem verfügt über wenigstens eine Sendeeinrichtung für Radarsignale, mehrere Sendeantennen, wenigstens eine Empfangseinrichtung für Radarsignale und eine oder mehrere Empfangsantennen. Die Sendeeinrichtung ist dabei so ausgebildet, dass sie für jede Sendeantenne individuelle Sendesignale mittels OFDM erzeugt, wobei in jedem Sendesignal nur eine Teilmenge aller verfügbarer Subträger belegt wird. Die Subträger werden dabei an den einzelnen Sendeantennen nach einem Verteilungsschema belegt, in dem jeder Subträger nur einer Sendeantenne zugeordnet ist und jeweils die jeder Sendeantenne zugeordneten Subträger über die gesamte Signalbandbreite verteilt sind. Die Empfangseinrichtung ist so ausgebildet, dass sie die empfangenen Radarsignale anhand der empfangenen Subträger und des Verteilungsschemas den Sendeantennen zuordnet, von denen sie ausgesendet wurden.

In einer Ausgestaltung des Radarsystems als Netzwerk befinden sich mehrere Sendeeinrichtungen mit jeweils einer oder mehreren Sendeantennen auf räumlich getrennten Plattformen. Die Sendefrequenzen der einzelnen Sendeeinrichtungen werden dabei entweder durch hochpräzise Uhren oder durch eine gemeinsame (drahtlose oder drahtgebundene) Referenz synchronisiert, so dass die Orthogonalität der von den verschiedenen Sendeeinrichtungen gesendeten Subträger gesichert wird.

Das vorgeschlagene Verfahren und das zughörige Radarsystem lassen sich insbesondere für MIMO-RadarAnwendungen und in Sensor-Netzwerken einsetzen. Die Nutzer- bzw. Sendesignaltrennung wird dabei erreicht, indem die verschiedenen Subträger eines Mehrträger-Signals nicht simultan an allen Sendeantennen abgestrahlt werden, sondern die einzelnen Subträger nach einem (beliebigen) Schema exklusiv den verschiedenen Sendeantennen unter Nutzung der gesamten Signalbandbreite zugeteilt werden. Dadurch werden die Mehrträger-signale im Spektralbereich verschränkt, sind gleichzeitig orthogonal und belegen trotzdem die vollständige Systembandbreite. In Kombination mit einem geeigneten Prozessierungsverfahren, z. B. dem oben genannten Modulationssymbol-basierten Prozessierungsverfahren, kann somit eine sehr hohe Dynamik bei gleichzeitig vollständiger Orthogonalität der Signalpfade erzielt werden.

### Kurze Beschreibung der Zeichnungen

Das vorgeschlagene Verfahren und das zugehörige Radarsystem werden nachfolgend anhand eines Ausführungsbeispiels in Verbindung mit den Zeichnungen nochmals kurz erläutert. Hierbei zeigen:
- Fig. 1: ein Beispiel für den Aufbau eines Radarsystems gemäß der vorliegenden Erfindung;
- Fig. 2: ein Beispiel für ein vereinfachtes OFDM-Spektrum;
- Fig. 3: ein Beispiel für ein mögliches Verteilungsschema zur Erzeugung orthogonal verschränkter Mehrträger-signale; und
- Fig. 4: ein Beispiel für eine Permutationsmatrix zur sukzessiven Belegung aller Subträger an einer Sendeantenne.

### Wege zur Ausführung der Erfindung

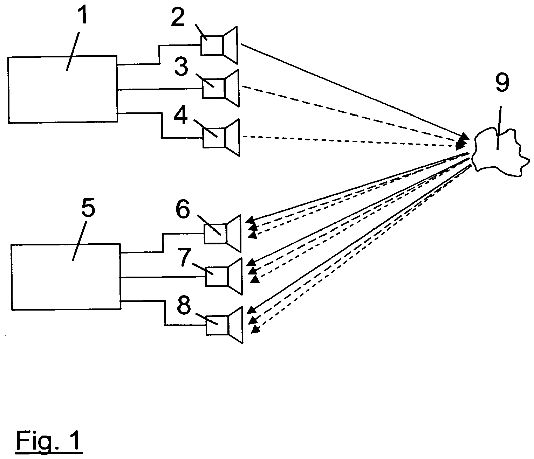

Figur 1 zeigt beispielhaft ein Radarsystem mit einer Sendeeinrichtung 1 mit drei Sendeantennen 2-4, die durch die Sendeeinrichtung mit individuellen Sendesignalen gespeist werden, sowie einer Empfangseinrichtung 5 mit drei Empfangsantennen 6-8. Die M = 3 Sendeantennen und N = 3 Empfangsantennen kommen hierbei simultan zum Einsatz. Dabei spielt es zunächst keine Rolle, ob sich diese auf einer Plattform (MIMO-Radar) oder auf verschiedenen Plattformen (Sensor-Netzwerk) befinden. Insgesamt existieren in diesem Beispiel 3 x 3 = 9 Signalpfade. An jedem Empfänger 6-8 überlagern sich die Sendesignale von M = 3 verschiedenen Sendern 2-4. Jeder Empfänger muss aus dem empfangenen Summensignal die Beiträge (in Amplitude und Phase) der einzelnen Sender bestimmen. Dies wird beim vorgeschlagenen Verfahren und dem zugehörigen Radarsystem durch Aufteilung der Sendesignale mittels OFDM auf mehrere Subträger erreicht, die den Sendeantennen nach dem beschriebenen Verteilungsschema zugeordnet werden.

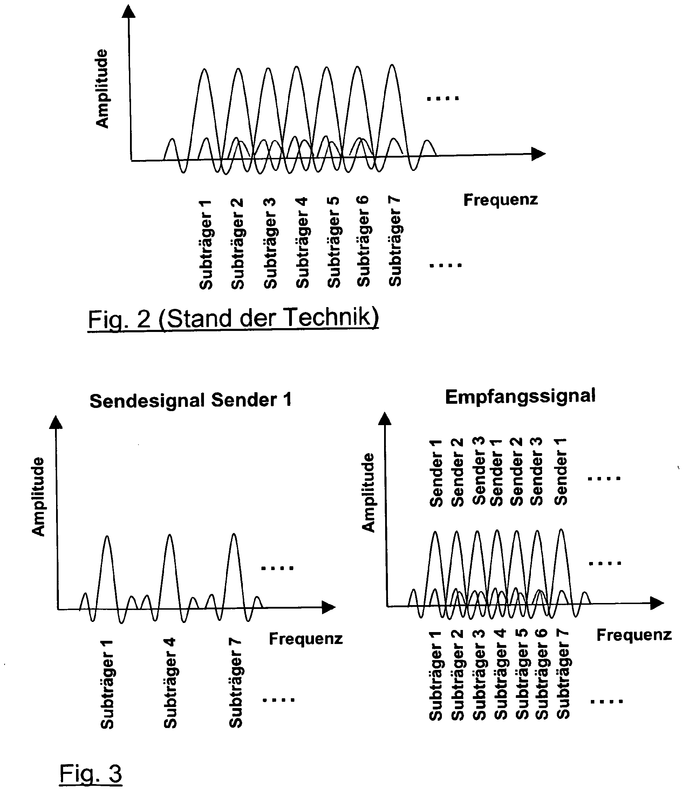

Figur 2 zeigt hierbei zunächst ein abstrahiertes OFDM-Spektrum, das aus der Aussendung einer großen Anzahl sinusförmiger phasenmodulierter Subträger resultiert. Beim vorliegenden Verfahren werden die einzelnen Subträger nach einem vorgegebenen Verteilungsschema exklusiv den verschiedenen Sendeantennen zugeteilt, wobei die jeder Sendeantenne zugeteilten Subträger über die gesamte Signalbandbreite verteilt werden. Das einfachste mögliche Verteilungsschema für die Zuteilung der Subträger ist eine sukzessiv abwechselnde Zuteilung. Im Beispielfall von drei Sendeantennen wird an der ersten Antenne der erste, vierte, siebte etc. Subträger abgestrahlt, an der zweiten Antenne der zweite, fünfte, achte etc. Subträger und an der dritten Antenne der dritte, sechste, neunte etc. Subträger. Dies ist für den ersten Sender bzw. die erste Sendeantenne im linken Teil der Figur 3 schematisch dargestellt. Am Empfänger bzw. an allen Empfangsantennen sind die sich überlagernden Signale orthogonal. Jeder empfangene Subträger kann direkt einem Sender zugeordnet werden, wie im rechten Teil der Figur 3 schematisch angedeutet ist, und wird von den anderen Sendern nicht beeinflusst. Da OFDM-Systeme in der Praxis mit einer sehr hohen Anzahl von Subträgern arbeiten, wird durch eine derartige Zuteilung die gesamte Bandbreite der einzelnen Sendesignale praktisch nicht reduziert.

Mit einer derartigen Sendesignaltrennung kann bei vollständiger Orthogonalität der Signalpfade eine sehr hohe Dynamik erreicht werden. So ergibt sich aus theoretischen Untersuchungen zu einem MIMO-Radar beim Einsatz eines typischen Code-basierten Verfahrens gemäß dem Stand der Technik eine erwartete Dynamik für die Impulsantwort in der Größenordnung von 30 dB. Messungen mit dem Modulationssymbol-basierten Verfahren bei Einsatz der erfindungsgemäßen Sendesignaltrennung zeigen demgegenüber eine Dynamik in der Größenordnung von 65 dB. Die Dynamik einer MIMO-Radar-Messung kann also mit dem vorgeschlagenen Verfahren potentiell um ca. 35 dB, d. h. um ca. den Faktor 3000, erhöht werden. Für den Einsatz in einem Sensornetzwerk, bei dem die einzelnen Sender nicht phasenkohärent arbeiten, konnte durch Computersimulationen gezeigt werden, dass mit dem vorgeschlagenen Verfahren immer noch eine zusätzliche Reduktion der Interferenz in der Größenordnung von 20 dB möglich ist.

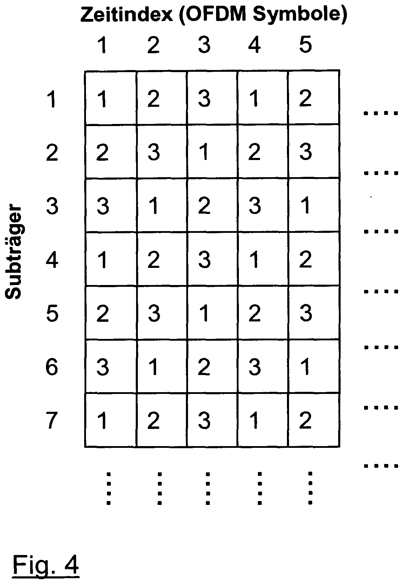

In einer vorteilhaften Ausgestaltung des vorgeschlagenen Verfahrens sowie des zugehörigen Radarsystems erfolgt eine zyklische Permutation der Zuordnung der einzelnen Subträger zu den Sendeantennen. Damit wird erreicht, dass nach einer bestimmten Anzahl von Zeitschritten jeder Subträger von jeder Antenne abgestrahlt wurde. Dies vermeidet eine Reduzierung der maximal messbaren Entfernung bei Einsatz des Modulationssymbol-basierten Verfahrens zur Entfernungsbestimmung. Figur 4 zeigt hierzu ein Beispiel für eine Permutationsmatrix für das bekannte Beispiel mit drei Sendeantennen, mit der diese zyklische Permutation erreicht werden kann. Die Zahlen in der Tabelle geben den zugeteilten Sender an, jede Spalte entspricht einem Verteilungsschema, das entsprechend den einzelnen Spalten in festen Zeitschritten wechselt.

### Bezugszeichenliste

- 1: Sendeeinrichtung
- 2, 3, 4: Sendeantennen
- 5: Empfangseinrichtung
- 6, 7, 8: Empfangsantennen
- 9: Objekt

## Patentansprüche

1. Verfahren zur Sendesignaltrennung in einem Radarsystem, das mehrere Sendeantennen (2-4) mit individuellen Sendesignalen und eine oder mehrere Empfangsantennen (6-8) für Radarsignale aufweist, bei dem die Radarsignale mit einer Signalbandbreite so über die einzelnen Sendeantennen (2-4) ausgesendet werden, dass empfangene Radarsignale den Sendeantennen (2-4) zugeordnet werden können, von denen sie ausgesendet wurden,
wobei die Sendesignale mittels OFDM auf mehrere Subträger aufgeteilt werden, die den Sendeantennen (2-4) nach einem Verteilungsschema zugeordnet werden, in dem jeder Subträger nur einer Sendeantenne (2-4) zugeordnet ist und jeweils die jeder Sendeantenne (2-4) zugeordneten Subträger über die gesamte Signalbandbreite verteilt sind.

2. Verfahren Anspruch 1,
**dadurch gekennzeichnet,**
**dass** das Verteilungsschema in festen oder variablen Zeitabständen gewechselt wird.

3. Verfahren nach Anspruch 2,
**dadurch gekennzeichnet,**
**dass** das Verteilungsschema so gewechselt wird, dass eine zyklische Permutation der Zuordnung der Subträger zu den Sendeantennen (2-4) erreicht wird, so dass jeweils nach einer festen Anzahl von Zeitschritten jeder Subträger von jeder Sendeantenne (2-4) abgestrahlt wurde.

4. Verfahren nach einem der Ansprüche 1 bis 3,
**dadurch gekennzeichnet,**
**dass** bei Radarsystemen, bei denen sich mehrere Sendeeinrichtungen (1) mit jeweils einer oder mehreren Sendeantennen (2-4) auf räumlich getrennten Plattformen befinden, Sendefrequenzen der einzelnen Sendeeinrichtungen (1) entweder durch hochpräzise Uhren oder durch eine gemeinsame Referenz synchronisiert werden, so dass die Orthogonalität der von den verschiedenen Sendeeinrichtungen (1) gesendeten Subträger gesichert wird.

5. Radarsystem, das wenigstens eine Sendeeinrichtung (1) für Radarsignale, mehrere Sendeantennen (2-4), wenigstens eine Empfangseinrichtung (5) für Radarsignale und eine oder mehrere Empfangsantennen (6-8) aufweist,
bei dem die Sendeeinrichtung (1) so ausgebildet ist, dass sie die Radarsignale mit einer Signalbandbreite so über die einzelnen Sendeantennen (2-4) aussendet, dass empfangene Radarsignale in der Empfangseinrichtung (5) den Sendeantennen (2-4) zugeordnet werden können, von denen sie ausgesendet wurden,
wobei die Sendeeinrichtung (1) so ausgebildet ist, dass sie die Sendesignale mittels OFDM auf mehrere Subträger aufteilt und die Subträger den Sendeantennen (2-4) nach einem Verteilungsschema zuordnet, in dem jeder Subträger nur einer Sendeantenne (2-4) zugeordnet ist und jeweils die jeder Sendeantenne (2-4) zugeordneten Subträger über die gesamte Signalbandbreite verteilt sind, und dass die Empfangseinrichtung (5) so ausgebildet ist, dass sie die empfangenen Radarsignale anhand der empfangenen Subträger und des Verteilungsschemas den Sendeantennen (2-4) zuordnet, von denen sie ausgesendet wurden.

6. Radarsystem nach Anspruch 5,
**dadurch gekennzeichnet,**
**dass** die Sendeeinrichtung (1) so ausgebildet ist, dass sie das Verteilungsschema zyklisch so wechselt, dass eine zyklische Permutation der Zuordnung der Subträger zu den Sendeantennen (2-4) erreicht wird, so dass jeweils nach einer festen Anzahl von Zeitschritten jeder Subträger von jeder Sendeantenne (2-4) abgestrahlt wurde.

7. Radarsystem nach Anspruch 5 oder 6,
**dadurch gekennzeichnet,**
**dass** sich mehrere Sendeeinrichtungen (1) mit jeweils einer oder mehreren Sendeantennen (2-4) auf räumlich getrennten Plattformen befinden, wobei Sendefrequenzen der einzelnen Sendeeinrichtungen (1) entweder durch hochpräzise Uhren oder durch eine gemeinsame Referenz synchronisiert werden, so dass die Orthogonalität der von den verschiedenen Sendeeinrichtungen (1) gesendeten Subträger gesichert wird.
